# EUROPÄISCHE PATENTSCHRIFT

(11) **EP 1 674 195 B1**
(45) Veröffentlichungstag und Bekanntmachung des Hinweises auf die Patenterteilung: **26.01.2011**
(21) Anmeldenummer: 05026191.6
(22) Anmeldetag: 01.12.2005
(51) Int. Cl.: B23K 37/04, B23K 37/053, B23K 26/28, B25B 13/54, B62D 65/02, B62D 27/02, B62D 23/00, B23Q 3/06, B23K 101/00, B23K 101/04

(54) **Verfahren zum Herstellen einer Schweissverbindung zwischen zwei ineinander gesteckten Hohlprofilen unter Verwendung einer Druckeinrichtung zum Erzeugen eines Nullspaltes vor dem Schweissen ; entsprechende Spannvorrichtung**
Process for manufacturing a weld connection between two inserted hollow profiles using a pressure device for suppressing the existing gap before the welding ; corresponding pressure device
Procédé de fabrication d'une liaison soudée entre deux profils creux insérés l'un dans l'autre employant un dispositif de pression pour supprimer le jeu avant l'étape de soudage : dispositif de pression correspondant

(30) Priorität: 22.12.2004 DE 102004061795
(43) Veröffentlichungstag der Anmeldung: 28.06.2006
(73) Patentinhaber: Wilhelm Karmann GmbH, 49084 Osnabrück (DE)
(72) Erfinder: Weiss, Lorenz, 49076 Osnabrück (DE); Schulz, Robert, 49090 Osnabrück (DE); Imhorst, Tobias, 49170 Hagen a.T.W. (DE); Exner, Markus, 49191 Belm (DE)
(74) Vertreter: Kronthaler, Schmidt & Coll.

(56) Entgegenhaltungen:
- DE-A1- 3 901 022
- US-A- 1 259 640
- US-A- 4 892 993
- US-A- 5 609 291
- US-A- 5 729 463
- US-B1- 6 302 478
- US-B1- 6 308 412

## Beschreibung

Die Erfindung betrifft ein Verfahren zum Herstellen einer Schweißverbindung zwischen zwei ineinander gesteckten Hohlprofilen und eine Druckeinrichtung zur Ausführung des Verfahrens.

Bei der Herstellung eines Kraftfahrzeuges werden Hohlprofile vorgefertigt und miteinander verbunden, um einen Kraftfahrzeugrahmen für das Kraftfahrzeug zu bilden.

Bei der Herstellung bestimmter Kraftfahrzeugrahmen werden Hohlprofile ineinander gesteckt und folgend durch einen Schweißvorgang verbunden. So wird z. B. die A-Säule eines Kraftfahrzeugrahmens in eine Ausnehmung eines zugeordneten Längsträgers des Kraftfahrzeugrahmens gesteckt und folgend durch einen Schweißvorgang mit diesem verbunden, um einen Teil des Kraftfahrzeugrahmens zu bilden.

Ist die A-Säule in den Längsträger eingesteckt, so ergibt sich ein Spalt zwischen der A-Säule und der Ausnehmung des Längsträgers, bevor der Schweißvorgang ausgeführt wird. Die Größe des Spaltes hängt von der Positioniergenauigkeit und den Toleranzen der Bauteile ab und kann bis zu einigen Millimetern betragen.

Für eine Vereinfachung des Schweißvorgangs wäre es wünschenswert, wenn der Spalt so klein wie möglich wäre.

Aufgabe der Erfindung ist es daher, ein Verfahren zum Herstellen einer Schweißverbindung zwischen zwei ineinander gesteckten Hohlprofilen bereitzustellen, bei dem der Spalt zwischen den ineinander gesteckten Hohlprofilen vor dem Ausführen eines Schweißvorganges so gering wie möglich ist.

Diese Aufgabe wird erfindungsgemäß gelöst durch ein Verfahren zum Herstellen einer Schweißverbindung zwischen zwei ineinander gesteckten Hohlprofilen gemäß Anspruch 1.

Unter dem Begriff Nullspalt ist im Rahmen der vorliegenden Erfindung ein Spalt zwischen den ineinander gesteckten Hohlprofilen vor dem Schweißvorgang zu verstehen, der kleiner ist als 1 Millimeter pro Seite. Bevorzugt ist die Größe des Spaltes kleiner als 0,3 Millimeter pro Seite. Weiter bevorzugt ist die Größe des Spaltes kleiner als 0,1 Millimeter pro Seite und höchst bevorzugt ist die Größe des Spaltes kleiner als 0,01 Millimeter pro Seite.

Der Begriff Nullspalt sollte jedoch nicht so verstanden werden, daß dieser entlang des gesamten Umfangs der Ausnehmung des zweiten Hohlprofils gebildet sein muß, obwohl dies wünschenswert sein kann. Vielmehr kann es für eine gewünschte Festigkeit der Verbindung der beiden ineinander gesteckten Hohlprofile ausreichend sein, wenn der Nullspalt lediglich entlang einiger Umfangsabschnitte der Ausnehmung des zweiten Hohlprofils gebildet ist.

Vorteilhaft wird das zweite Hohlprofil nach dem Schritt a) in einer Fügestation fixiert.

Ebenso vorteilhaft wird das erste Hohlprofil nach dem Schritt b) in der Fügestation fixiert.

Bevorzugt werden die Hohlprofile senkrecht zueinander in der Fügestation fixiert.

Vorteilhaft wird nach dem Schritt c) die Druckeinrichtung in der Fügestation fixiert.

Vorteilhaft wird die Druckeinrichtung per Knopfdruck aktiviert.

Die Druckeinrichtung ist, gemäß der Erfindung über eine Kraftsteuerung angehalten. Der Druck, den die Druckeinrichtung erzeugt, wird um die gegenüberliegenden Anlagebereiche auseinander zu drücken, erfaßt. Überschreitet dieser Druck einen vorher eingestellten Druck, so wird die Druckeinrichtung angehalten.

Die Druckeinrichtung kann nach dem Schritt e) oder f) deaktiviert werden, um die Druckeinrichtung für ein Entnehmen derselben aus dem Hohlprofil vorzubereiten. Der Begriff "Aktivieren der Druckeinrichtung" steht somit im Rahmen der vorliegenden Erfindung für die Phase, in der die Druckeinrichtung einen Druck aufbaut, um die Anlagebereiche auseinander zu drücken. Der Begriff "Deaktivieren der Druckeinrichtung" steht somit im Rahmen der vorliegenden Erfindung für die Phase, in der der Druck, um die gegenüberliegenden Anlagebereiche auseinander zu drücken, abgebaut wird.

Die Druckeinrichtung kann somit vor oder nach dem Ausführen des Schweißvorganges deaktiviert werden:
1. Bevorzugt wird die Druckeinrichtung angehalten, wenn ein ausreichender Nullspalt erzeugt ist, der Schweißvorgang ausgeführt und erst dann die Druckeinrichtung deaktiviert. Auf diese Weise ist sichergestellt, daß sich keine Rückverformung des ersten Hohlprofils ergibt und während des Schweißvorgangs ein optimaler Nullspalt erzeugt ist. Eine Rückverformung der Anlagebereiche des ersten Hohlprofils kann sich bspw. aufgrund der Materialparameter oder der geometrischen Verhältnisse ergeben.
2. Die Druckeinrichtung kann jedoch auch vor dem Ausführen des Schweißvorganges deaktiviert werden. Dies kann z. B. dann sinnvoll sein, wenn die Rückverformung der Anlagebereiche des ersten Hohlprofils derart gering ist, daß sich die durch die Rückverformung der Anlagebereiche ergebende Größe des Spaltes weiterhin für das folgend auszuführende Schweißverfahren eignet. Dies kann ferner sinnvoll sein, wenn die Anlagebereiche des ersten Hohlprofils schon im plastischen Bereich verformt sind, bspw. bei einem Rohr, das dadurch hergestellt wurde, daß es über einen Dorn gezogen worden ist, da in diesem Fall eine Rückverformung nicht stattfindet bzw. nur gering ausfällt.

In beiden Fällen ist jedoch die Verformung durch das Ausführen des Schweißvorganges bleibend und Toleranzen, die sich während des bisherigen Herstellungsverfahrens ergeben haben, werden ausgeglichen.

Vorteilhaft wird der Nullspalt entlang 1/3, bevorzugt mindestens entlang 1/2, weiter bevorzugt mindestens entlang 2/3 und höchst bevorzugt mindestens entlang 4/5 einer Länge des Anlagebereiches, senkrecht zu einer Druckrichtung der Druckeinrichtung, erzeugt.

Vorteilhaft drückt die Druckeinrichtung mindestens einen weiteren Anlagebereich einer weiteren Fläche des ersten Hohlprofils an das zweite Hohlprofil, um einen weiteren Nullspalt zwischen den Anlagebereichen des ersten Hohlprofils und Umfangsabschnitten der Ausnehmung des zweiten Hohlprofils zu erzeugen.

Bevorzugt drückt die Druckeinrichtung zwei weitere Anlagebereiche des ersten Hohlprofils, von denen jeder auf einer weiteren Fläche des ersten Hohlprofils gebildet ist, an Umfangsabschnitte der Ausnehmung des zweiten Hohlprofils, um zwei weitere Nullspalte zwischen Anlagebereichen des ersten Hohlprofils und Umfangsabschnitten der Ausnehmung des zweiten Hohlprofils zu erzeugen.

Weiter bevorzugt sind in diesem Fall die beiden weiteren Anlagebereiche auf gegenüberliegenden Flächen des ersten Hohlprofils gebildet.

Bevorzugt wird in Schritt f) ein Laserschweißverfahren ausgeführt. Ein Laserschweißverfahren wird wegen der geringeren Wärmeeinleitung und daraus resultierenden, geringen Korrosion bevorzugt. Für ein Laserschweißverfahren ohne Zusatzdraht ist es bspw. ausreichend, wenn der Nullspalt kleiner als 0,3 mm pro Seite ist. Ferner können andere Schweißverfahren verwendet werden, insbesondere Schutzgasschweißverfahren, wie z. B. ein Mag-Schweißverfahren und ein Mig-Schweißverfahren. Insbesondere werden Schweißverfahren bevorzugt, die ohne Zuführen eines Zusatzdrahtes auskommen. Alternativ kann ein Lötverfahren verwendet werden, insbesondere ein Schutzgas-Lötverfahren, wie z. B. ein MIG-Lötverfahren.

Die Hohlprofile können in einem Roll- oder Walzverfahren vorgefertigt werden. Alternativ können die Hohlprofile in einem Innenhochdruckumformverfahren (IHU-Verfahren) vorgefertigt werden. Bevorzugt werden geschlossene Hohlprofile verwendet.

Bevorzugt werden die Hohlprofile mit einem rechteckigen Querschnitt vorgefertigt.

Vorteilhaft wird ein Druck, den die Druckeinrichtung im Schritt d) erzeugt, um die gegenüberliegenden Anlagebereiche auseinander zu drücken, hydraulisch oder pneumatisch oder durch einen Roboterarm oder durch einen Stellmotor erzeugt.

Zwei auf diese Weise verbundenen Hohlprofile können als Rahmenstruktur oder Rahmenteil für einen Kraftfahrzeugrahmen eines Kraftfahrzeuges verwendet werden.

Die Druckeinrichtung zur Ausführung des erfindungsgemäßen Verfahrens ist im Anspruch 14 definiert.

Bevorzugt verläuft die Pressrichtung entgegengesetzt zur Löserichtung, insbesondere zeigt die Pressrichtung bevorzugt aus dem Gehäuse heraus und die Löserichtung in das Gehäuse hinein.

Bevorzugt umfaßt das Gehäuse einen Befestigungsbereich für eine Befestigung des Gehäuses an der Fügestation.

Bevorzugt sind die Seitenflächen des Spreizkeils zum Zusammenwirken mit den Pressbacken durch Seitenflächen eines Pyramidenstumpfes gebildet.

Bevorzugt weist der Pyramidenstumpf eine quadratische Grundfläche auf.

Die Druckeinrichtung kann zwei Pressbacken aufweisen, die jeweils mit einer Seitenfläche des Pyramidenstumpfes zusammenwirken.

Die Druckeinrichtung kann vier Pressbacken aufweisen, die jeweils mit einer Seitenfläche des Pyramidenstumpfes zusammenwirken.

Der Pyramidenstumpf kann eine drei-, fünf-, sechs- oder mehreckige Grundfläche aufweisen, wobei regelmäßige Grundflächen bevorzugt sind.

Bevorzugt umfaßt die Rückholeinrichtung mindestens eine Rückholfeder, die die Pressbacken aufeinander zu bewegt, wenn der Spreizkeil entlang der Löserichtung bewegt wird.

Alternativ oder zusätzlich kann die Rückholeinrichtung längliche Vorsprünge umfassen, die jeweils an Seitenflächen des Spreizkeils gebildet sind, die mit den Pressbacken zusammenwirken, und die in eine entsprechende Ausnehmung der Pressbacken greifen, sodaß der Spreizkeil über die Vorsprünge mit den Pressbacken zusammenwirkt.

Der Spreizkeil und / oder die Pressbacken können in dem Gehäuse mittels Gleitlager verschieblich angeordnet sein.

Die Erfindung wird nachfolgend anhand zweier Beispiele unter Bezugnahme auf eine Zeichnung erläutert. Es zeigen:
- Fig. 1: eine seitliche Querschnittsansicht einer Druckeinrichtung, die zwischen Anlagebereichen eines ersten Hohlprofils angeordnet ist, wobei das erste Hohlprofil in ein zweites Hohlprofil gesteckt ist;
- Fig. 2: eine Draufsicht auf die Anordnung der Fig. 1;
- Fig. 3: eine seitliche Querschnittsansicht ähnlich zu der der Fig. 1, wobei eine Variante der Druckeinrichtung gezeigt ist; und
- Fig. 4: eine Draufsicht der Anordnung der Fig. 3.

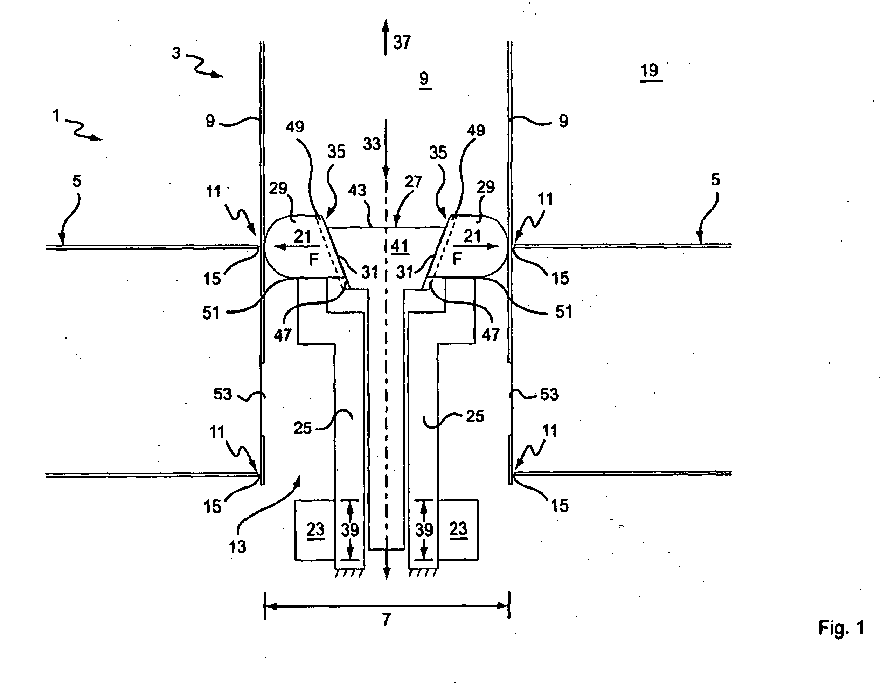

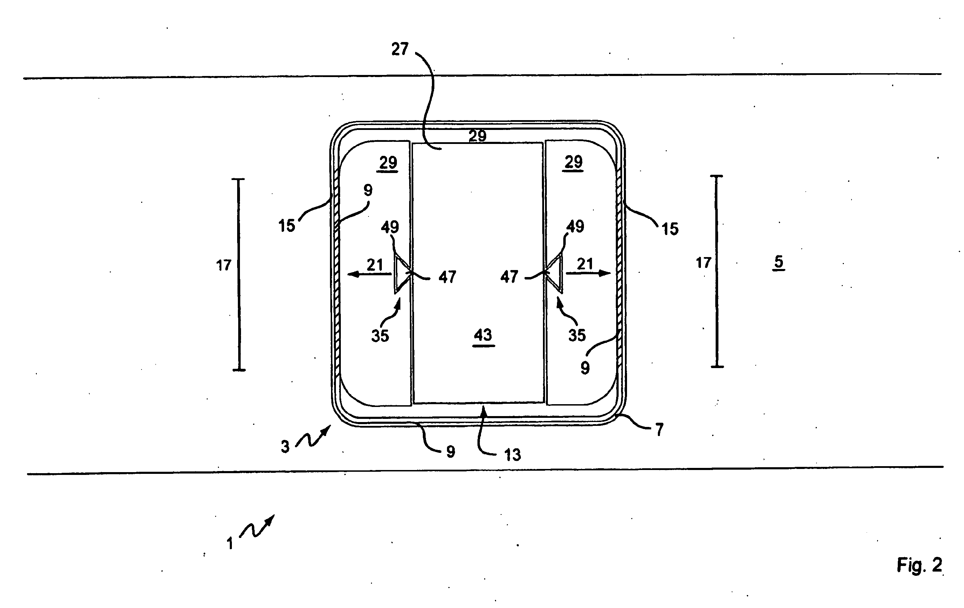

Folgend wird unter Bezug auf die Figuren 1 und 2 ein erstes Beispiel beschrieben:

Ein erstes Hohlprofil 3 wird in einer Ausnehmung 7 eines zweiten Hohlprofils 5 gesteckt, das an einer Fügestation 19 befestigt ist, wobei die Befestigung selbst nicht dargestellt ist. Anschließend wird das erste Hohlprofil 3 an der Fügestation 19 befestigt. Die beiden Hohlprofile 3, 5 sollen über eine Schweißverbindung miteinander verbunden werden, um ein Rahmenteil 1 eines Kraftfahrzeugrahmens eines Kraftfahrzeuges zu bilden.

Folgend wird eine Druckeinrichtung 13 in das erste Hohlprofil 3 eingebracht, um Anlagebereiche 11 auf gegenüberliegenden Flächen 9 des ersten Hohlprofils 3 an die Ausnehmung 7 des zweiten Hohlprofils 5 heran zudrücken, um einen Nullspalt 15 zwischen dem ersten Hohlprofil 3 und dem zweiten Hohlprofil 5 zu erzeugen, um das Herstellen einer Schweißverbindung zwischen dem ersten Hohlprofil 3 und dem zweiten Hohlprofil 5 zu vereinfachen.

Die Druckeinrichtung 13 umfaßt ein Gehäuse 25, in dem ein Spreizkeil 27 und zwei Pressbacken 29 verschieblich geführt sind. Vorliegend sind die Pressbacken 29 über Gleitlager 51 verschieblich in dem Gehäuse 25 geführt. Der Spreizkeil 27 weist vorliegend keine besondere Lagerung in dem Gehäuse 25 auf, kann jedoch alternativ über Gleitlager in diesem verschieblich geführt sein.

Die Druckeinrichtung 13 umfaßt einen Befestigungsbereich 39, mittels dessen die Druckeinrichtung 13 folgend in einer Halteeinrichtung 23 der Fügestation 19 fixiert wird. Die Halteeinrichtung 23 und die Befestigungsbereiche 39 sind derart aufeinander abgestimmt, daß die Pressbacken 29 der Druckeinrichtung 13 auf Höhe der Ausnehmung 7 des zweiten Hohlprofils 5, in der in Fig. 1 gezeigten Stellung, befestigt werden.

Folgend wird die Druckeinrichtung 13 aktiviert, indem der Spreizkeil 27 entlang einer Pressrichtung 33 mit Hilfe eines nicht dargestellten Stellmotors aus dem Gehäuse 25 gezogen wird. Durch diese Bewegung wirkt eine Kraft F entlang einer Druckrichtung 21 auf die Pressbacken 29, die eine Verschiebung der Pressbacken 29 dadurch hervorruft, daß gegenüberliegende Seitenflächen 31 eines Pyramidenstumpfes 41 auf die Pressbacken 29 der Druckeinrichtung 13 wirken, wodurch die gegenüberliegenden Anlagebereiche 11 auseinander gedrückt werden.

Über eine nicht dargestellte Wegsteuerung wird der Verfahrweg erfaßt, den der Stellmotor 13 den Spreizkeil 27 aus dem Gehäuse 25 herauszieht. Überschreitet der Verfahrweg einen vorbestimmten Wert, so wird der Stellmotor angehalten. Der vorbestimmte Wert ist variabel und so einzustellen, daß die Druckeinrichtung erst dann angehalten wird, wenn der Nullspalt 15 eine Größe aufweist, die für den folgend auszuführenden Schweißvorgang ausreicht.

Hat der Stellmotor den Spreizkeil 27 bis zu dem vorbestimmten Verfahrweg aus dem Gehäuse 25 gezogen, sodaß ein ausreichender Nullspalt 15 gebildet ist, so wird die Druckeinrichtung 13 angehalten und ein Schweißvorgang entlang des Nullspaltes 15 ausgeführt, um das erste Hohlprofi 3 mit dem zweiten Hohlprofil 5 zu verbinden.

Vorliegend ist der Verfahrweg des Spreizkeils 27 so eingestellt, daß der Nullspalt kleiner als 0,3 Millimeter ist, sodaß die beiden Hohlprofile 3, 5 über ein Laserschweißverfahren ohne Zusatzdraht miteinander verbunden werden können.

Der Nullspalt 15 wird vorliegend nicht entlang des gesamten Umfanges der Ausnehmung 7 des zweiten Hohlprofils 5 gebildet, sondern lediglich entlang Umfangsabschnitten 17 der Ausnehmung 7 des zweiten Hohlprofils 5.

Folgend wird die Druckeinrichtung 13 deaktiviert, d. h. zurück in die Ausgangslage überführt. Dies geschieht vorliegend dadurch, daß der Spreizkeil 27 von dem Stellmotor entlang einer Löserichtung 37 bewegt wird.

Um die Pressbacken 29 während des Deaktivierens gleichzeitig aufeinander zu zubewegen, weist die Druckeinrichtung 13 eine Rückholeinrichtung 35 auf. Die Rückholeinrichtung 35 umfaßt zwei längliche Vorsprünge 47, von denen jeweils einer auf einer der gegenüberliegenden Seitenflächen 31 des Pyramidenstumpfes 41 gebildet ist, und ferner zwei Ausnehmungen 49, die in den Pressbacken 29 gebildet sind und in denen jeweils ein länglicher Vorsprung 47 verschieblich geführt ist. Vorliegend weisen der längliche Vorsprung 47 und die Ausnehmung 49 die Form eines Dreiecks auf.

Dadurch, daß die Bewegung des Spreizkeils 27 mit den Pressbacken 29 gekoppelt ist, über den länglichen Vorsprung 47 und die Ausnehmung 49, werden die Pressbacken 29 aufeinander zubewegt, wenn der Spreizkeil 27 entlang der Löserichtung 37 bewegt wird.

Der Stellmotor verfährt den Spreizkeil 27 während des Deaktivierens der Druckeinrichtung 13 den gleichen Verfahrweg zurück, um den er den Spreizkeil 27 aus dem Gehäuse 25 gezogen hat.

Anschließend wird die Druckeinrichtung 13 von der Halteeinrichtung 23 gelöst und entlang der Pressrichtung 33 um eine in Fig. 1 vertikale Höhe des zweiten Hohlprofils 5 verschoben, sodaß die Pressbacken 29 zwischen den in Fig. 1 unten dargestellten Anlagebereichen 11 zur Anlage kommen. In dieser Stellung wird die Druckeinrichtung 13 mit Hilfe einer nicht dargestellten Halteeinrichtung 23 fixiert und das bisher dargestellte Verfahren wiederholt sich, um auch an dieser Stelle einen Nullspalt 15 und eine Schweißverbindung zwischen dem ersten Hohlprofil 3 und dem zweiten Hohlprofil 5 zu erzeugen.

Anschließend wird die Druckeinrichtung 13 vollständig aus dem ersten Hohlprofil 3 entfernt.

Das Rahmenteil 1 kann folgend einer Tauchlackierung zugeführt werden, wobei ein Korrosionsschutz und / oder eine Grundierung durch einen Durchlaß 53 in dem ersten Hohlprofil auch in einen Innenraum des zweiten Hohlprofils 5 gelangen kann.

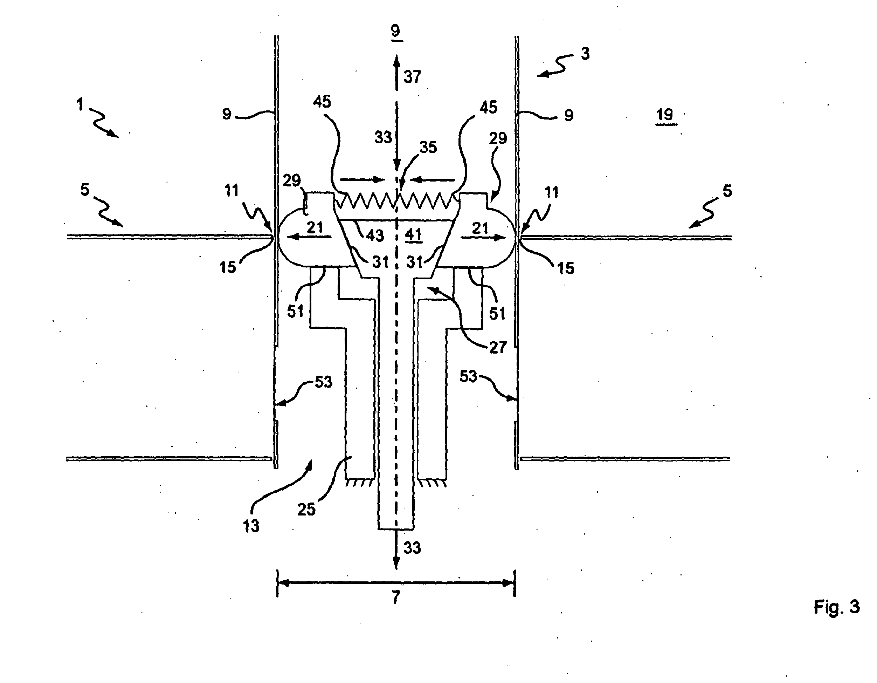

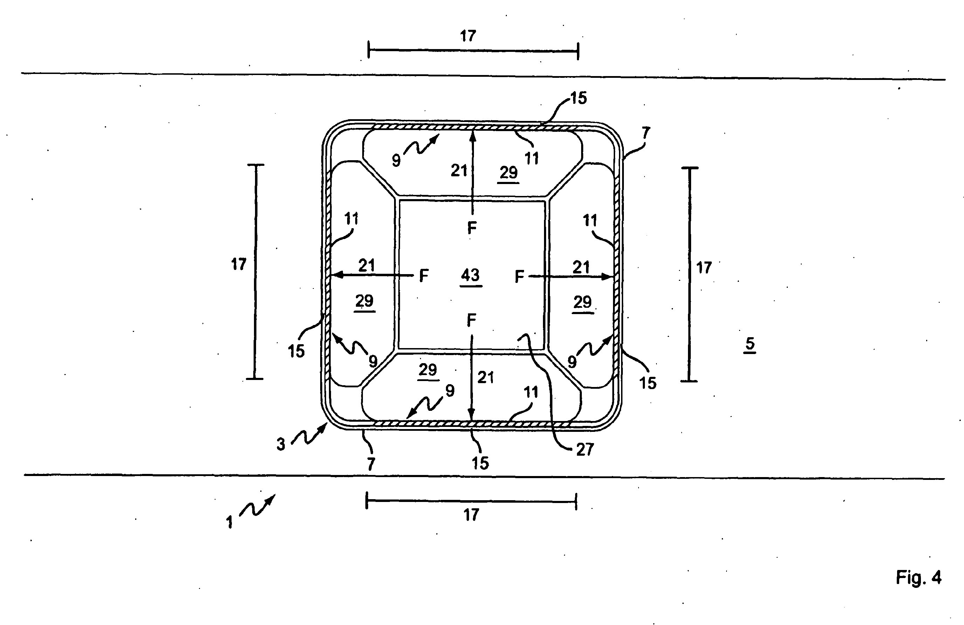

Unter Bezug auf die Figuren 3 und 4 wird folgend ein zweites Ausführungsbeispiel beschrieben. Das zweite Ausführungsbeispiel der Figuren 3 und 4 unterscheidet sich von dem ersten Ausführungsbeispiel der Figuren 1 und 2 durch die Gestaltung der Druckeinrichtung, weshalb folgend nur die Änderungen in der Gestaltung der Druckeinrichtung 13 beschrieben werden sollen.

Die Druckeinrichtung 13 umfaßt folgend vier Pressbacken 29, die jeweils an einer Seitenfläche 31 eines Pyramidenstumpfes 41 anliegen. Der Pyramidenstumpf 41 weist eine Grundfläche 43 auf, die vorliegend quadratisch ist.

Anstelle eines länglichen Vorsprunges 47 und einer Ausnehmung 49 umfaßt die Rückholeinrichtung 35 des zweiten Ausführungsbeispiels zwei Rückholfedern 45, die derart angeordnet sind, daß jede Rückholfeder 45 gegenüberliegende Pressbacken 29 miteinander verbindet.

Wird der Spreizkeil 27 aus dem Gehäuse 25 herausgezogen, so werden die Pressbacken 29 durch die Seitenflächen 31 des Pyramidenstumpfes 41 auseinander gedrückt. Wird der Spreizkeil 27 wieder in das Gehäuse 25 geschoben, so bewegen sich die Pressbacken 29 aufgrund der Federkraft der Rückholfedern 45 wieder aufeinander zu.

Gemäß der Erfindung (siehe Ansprüche 1 und 14) ist die Druckeinrichtung 13 über einen Roboterarm in das erste Hohlprofil 3 eingeführt und über den Roboterarm auch während der Aktivierung der Druckeinrichtung 13 in Position gehalten. Ferner umfaßt der Roboterarm eine pneumatisch angetriebene Verschiebeeinrichtung, die den Spreizkeil 27 in der Druckeinrichtung 13 verschieben kann, d. h. entlang der Löse- und Pressrichtung bewegen kann.

Da die Druckeinrichtung 13 an dem Roboterarm fixiert ist, und bevorzugt integral mit diesem gebildet ist, entfällt in dem zweiten Ausführungsbeispiel der Befestigungsbereich 39 für die Druckeinrichtung.

Anstelle einer Wegsteuerung weist der Roboterarm 13 eine Kraftsteuerung auf, sodaß die Druckeinrichtung 13 angehalten wird, wenn eine Kraft zum Herausziehen des Spreizkeils 27 aus dem Gehäuse 25 einen vorbestimmten Kraftwert übersteigt.

### BEZUGSZEICHENLISTE

- 1: Rahmenteil
- 3: erstes Hohlprofil
- 5: zweites Hohlprofil
- 7: Ausnehmung des zweiten Hohlprofils
- 9: Fläche des ersten Hohlprofils
- 11: Anlagebereich
- 13: Druckeinrichtung
- 15: Nullspalt
- 17: Umfangsabschnitt der Ausnehmung des zweiten Hohlprofils
- 19: Fügestation
- 21: Druckrichtung (einer Pressbacke)
- 23: Halteeinrichtung der Fügestation (für die Druckeinrichtung)
- 25: Gehäuse
- 27: Spreizkeil
- 29: Pressbacke
- 31: Seitenfläche des Spreizkeils
- 33: Pressrichtung
- 35: Rückholeinrichtung
- 37: Löserichtung
- 39: Befestigungsbereich der Druckeinrichtung
- 41: Pyramidenstumpf
- 43: Grundfläche des Pyramidenstumpfes
- 45: Rückholfeder
- 47: länglicher Vorsprung
- 49: Ausnehmung der Pressbacke
- 51: Gleitlager
- 53: Durchlaß (für Tauchlackierung)

- F: Kraft

## Patentansprüche

1. Verfahren zum Herstellen einer Schweißverbindung zwischen zwei ineinander gesteckten Hohlprofilen (3, 5), umfassend:
a) Bereitstellen eines ersten (3) und eines zweiten (5) Hohlprofils,
b) Stecken des ersten Hohlprofils (3) in eine Ausnehmung (7) des zweiten Hohlprofils (5), wobei das erste Hohlprofil (3) gegenüberliegende Flächen (9) aufweist, die jeweils einen Anlagebereich (11) umfassen, der zur Verbindung mit Umfangsabschnitten (17) der Ausnehmung (7) des zweiten Hohlprofils (5) dient,
c) Anordnen einer an einem kraftgesteuerten Roboterarm gehaltenen Druckeinrichtung (13) zwischen den gegenüberliegenden Anlagebereichen (11),
wobei die Druckeinrichtung mindestens zwei Pressbacken (29) ,eine pneumatisch angetriebene Verschiebeeinrichtung, ein Spreizkeil und ein Gehäuse (25) aufweist
d) Aktivieren der Druckeinrichtung (13) und Auseinanderbewegen von den mindestens zwei Pressbacken (29) gegen die Anlagebereiche (11) mittels der pneumatisch angetriebenen Verschiebeeinrichtung durch Herausziehen des Spreizkeils (27) aus dem Gehäuse (25), um die gegenüberliegenden Anlagebereiche (11) auseinander zu drücken, um mindestens abschnittsweise einen Nullspalt (15) zwischen den Anlagebereichen (11) des ersten Hohlprofils (3) und Umfangsabschnitten (17) der Ausnehmung (7) des zweiten Hohlprofils (5) zu erzeugen,
e) Anhalten der Druckeinrichtung (13), wenn eine Kraft zum Herausziehen des Spreizkeils (27) aus dem Gehäuse (25) einen vorbestimmten Wert übersteigt,
f) Ausführen eines Schweiß- oder Lötvorganges entlang des Nullspaltes (15), um das erste Hohlprofil (3) mit dem zweiten Hohlprofil (5) zu verbinden, und
g) Deaktivieren der Druckeinrichtung und Zurückbewegen des Spreizkeils (27), wobei die Bewegung des Spreizkeils (27) durch längliche, formschlüssig ineinandergreifende Vorsprünge (47) und Ausnehmungen (49) an Spreizkeil (27) und Pressbacken (29) mit einer Zurückbewegung der Pressbacken (29) in Richtung zueinander gekoppelt ist.

2. Verfahren nach Anspruch 1,
ferner umfassend,
nach dem Schritt a), ein Fixieren des zweiten Hohlprofils (5) in einer Fügestation (19).

3. Verfahren nach Anspruch 1 oder 2,
ferner umfassend,
nach dem Schritt b), ein Fixieren des ersten Hohlprofils (3) in der Fügestation (19).

4. Verfahren nach Anspruch 2 und 3,
**dadurch gekennzeichnet,**
**daß** die Hohlprofile (3, 5) senkrecht zueinander in der Fügestation (19) fixiert werden.

5. Verfahren nach einem der vorangehenden Ansprüche,
ferner umfassend,
nach dem Schritt c), ein Fixieren der Druckeinrichtung (13) in der Fügestation (19).

6. Verfahren nach einem der vorangehenden Ansprüche,
**dadurch gekennzeichnet,**
**daß** die Druckeinrichtung (13) per Knopfdruck aktiviert wird.

7. Verfahren nach einem der vorangehenden Ansprüche,
**dadurch gekennzeichnet,**
**daß** der Nullspalt (15) mindestens entlang 2/3 einer Länge des Anlagebereiches (11), senkrecht zu einer Druckrichtung (21) der Druckeinrichtung (13), erzeugt wird.

8. Verfahren nach einem der vorangehenden Ansprüche,
**dadurch gekennzeichnet,**
**daß** die Druckeinrichtung (13) mindestens einen weiteren Anlagebereich (11) einer weiteren Fläche (9) des ersten Hohlprofils (3) an das zweite Hohlprofil (5) drückt, um einen weiteren Nullspalt (15) zwischen den Anlagebereichen (11) des ersten Hohlprofils (3) und Umfangsabschnitten (17) der Ausnehmung (7) des zweiten Hohlprofils (5) zu erzeugen.

9. Verfahren nach Anspruch 8, **dadurch gekennzeichnet, daß** die Druckeinrichtung (13) zwei weitere Anlagebereiche (11) des ersten Hohlprofils (3), von denen jeder auf einer weiteren Fläche (9) des ersten Hohlprofils (3) gebildet ist, an Umfangsabschnitte (17) der Ausnehmung (7) des zweiten Hohlprofils (5) drückt, um zwei weitere Nullspalte (15) zwischen Anlagebereichen (11) des ersten Hohlprofils (3) und Umfangsabschnitten (17) der Ausnehmung (7) des zweiten Hohlprofils (5) zu erzeugen.

10. Verfahren nach Anspruch 9, **dadurch gekennzeichnet, daß** die beiden weiteren Anlagebereiche (11) auf gegenüberliegenden Flächen (9) des ersten Hohlprofils (3) gebildet sind.

11. Verfahren nach einem der vorangehenden Ansprüche,
**dadurch gekennzeichnet,**
**daß** im Schritt f) ein Laserschweißverfahren ausgeführt wird.

12. Verfahren nach einem der vorangehenden Ansprüche,
**dadurch gekennzeichnet,**
**daß** die Hohlprofile (3, 5) in einem IHU- oder Roll- oder Walzverfahren vorgefertigt werden.

13. Verfahren nach Anspruch 12,
**dadurch gekennzeichnet,**
**daß** Hohlprofile (3, 5) mit einem rechteckigen Querschnitt vorgefertigt werden.

14. Druckeinrichtung (13) zur Ausführung des Verfahrens nach einem der Ansprüche 1 bis 13 mit einen an einem kraftgesteuerten Roboterarm gehaltenen Gehäuse (25), wobei in dem Gehäuse (25) ein Spreizkeil (27) und mindestens zwei Pressbacken (29) mittels einer pneumatisch angetriebenen Verschiebeeinrichtung kraftgesteuert verschieblich angeordnet sind, der Spreizkeil (27) Seitenflächen (31) umfaßt, die jeweils mit einer Pressbacke (29) derart zusammenwirken, daß eine Bewegung des Spreizteils (27) entlang einer Pressrichtung (33) eine Bewegung der Pressbacken (29) hervorruft, bei der sich die Pressbacken (29) voneinander entfernen, und eine den Pressbacken (29) zugeordnete Rückholeinrichtung (35) mit länglichem, formschlüssig ineinandergreifenden Vorsprüngen (47) und Ausnehmungen (49) an Spreizkeil (27) und Pressbacken (29) bei einer Bewegung des Spreizkeils (27) entlang einer Löserichtung (37) eine gekoppelte Bewegung des Spreizkeils (27) und der Pressbacken (29) hervorruft, bei der sich die Pressbacken (29) aufeinander zu bewegen.

15. Druckeinrichtung nach Anspruch 14,
**dadurch gekennzeichnet,**
**daß** die Pressrichtung (33) entgegengesetzt zur Löserichtung (37) verläuft, insbesondere die Pressrichtung (33) aus dem Gehäuse (25) heraus zeigt und die Löserichtung (37) in das Gehäuse zeigt.

16. Druckeinrichtung nach Anspruch 14 oder 15,
**dadurch gekennzeichnet,**
**daß** die Seitenflächen (31) des Spreizkeils (27) zum Zusammenwirken mit den Pressbacken (29) durch Seitenflächen eines Pyramidenstumpfes (41) gebildet sind.

17. Druckeinrichtung nach Anspruch 16,
**dadurch gekennzeichnet,**
**daß** der Pyramidenstumpf (41) eine quadratische Grundfläche (43) aufweist.

18. Druckeinrichtung nach Anspruch 17,
**dadurch gekennzeichnet,**
**daß** diese zwei Pressbacken (29) aufweist, die jeweils mit einer Seitenfläche des Pyramidenstumpfes (41) zusammenwirken.

19. Druckeinrichtung nach Anspruch 17,
**dadurch gekennzeichnet,**
**daß** diese vier Pressbacken (29) aufweist, die jeweils mit einer Seitenfläche des Pyramidenstumpfes (41) zusammenwirken.

20. Druckeinrichtung nach Anspruch 16,
**dadurch gekennzeichnet,**
**daß** der Pyramidenstumpf (41) eine drei-, fünf-, sechs- oder mehreckige, regelmäßige Grundfläche (43) aufweist.

21. Druckeinrichtung nach einem der Ansprüche 14 bis 20,
**dadurch gekennzeichnet,**
**daß** die Rückholeinrichtung (35) mindestens eine Rückholfeder (45) umfaßt, die die Pressbacken (29) aufeinander zu bewegt, wenn der Spreizkeil (27) entlang der Löserichtung (37) bewegt wird.

22. Druckeinrichtung nach einem der Ansprüche 14 bis 21,
**dadurch gekennzeichnet,**
**daß** der Spreizkeil (27) und / oder die Pressbacken (29) in dem Gehäuse (25) mittels Gleitlager (51) verschieblich angeordnet sind.

## Claims

1. A method for manufacturing a welded connection between two hollow profiles (3, 5) that are inserted into each other, said method comprising:
a) providing a first (3) and a second (5) hollow profile,
b) inserting the first hollow profile (3) into a recess (7) of the second hollow profile (5), wherein the first hollow profile (3) has two opposing surfaces (9), each comprising an contact portion (11) serving for a connection with circumferential sections (17) of the recess (7) of the second hollow profile (5),
c) disposing a pressure device (13) supported by a force-controlled robot arm between the opposing contact portions (11), the pressure device comprising at least two pressing jaws (29), a pneumatically driven displacement device, a spread wedge and a housing (25),
d) activating the pressure device (13) and moving apart the at least two pressing jaws (29) against the contact portions (11) by means of the pneumatically driven displacement device by extracting the spread wedge (27) from the housing (25) in order to press apart the opposing contact portions (11), in order to at least in sections generate a zero-gap (15) between the contact portions (11) of the first hollow profile (3) and circumferential sections (17) of the recess (7) of the second hollow profile (5),
e) stopping the pressure device (13) when a force for extracting the spread wedge (27) from the housing (25) exceeds a predetermined value,
f) performing a welding or soldering process along the zero-gap (15) in order to connect the first hollow profile (3) to the second hollow profile (5), and
g) deactivating the pressure device and moving back the spread wedge (27), the movement of the spread wedge (27) being coupled with a backward movement of the pressing jaws (29) towards each other by means of elongated, positively engaging protrusions (47) and recesses (49) at the spread wedge (27) and the pressing jaws (29).

2. The method according to claim 1, further comprising
subsequently to step a), fixing the second hollow profile (5) in a joining station (19).

3. The method according to claim 1 or 2, further comprising
subsequently to step b), fixing the first hollow profile (3) in the joining station (19).

4. The method according to claim 2 and 3, **characterized in that**
the hollow profiles (3, 5) are fixed perpendicular to each other in the joining station (19).

5. The method according to one of the preceding claims, further comprising
subsequently to step c), fixing the pressure device (13) in the joining station (19).

6. The method according to one of the preceding claims, **characterized in that**
the pressure device (13) is activated by pushing a button.

7. The method according to one of the preceding claims, **characterized in that**
the zero-gap (15) is generated at least along 2/3 of a length of the contact portion (11), perpendicular to a pressure direction (21) of the pressure device (13).

8. The method according to one of the preceding claims, **characterized in that**
the pressure device (13) presses at least one further contact portion (11) of a further surface (9) of the first hollow profile (3) against the second hollow profile (5), in order to generate a further zero-gap (15) between the contact portions (11) of the first hollow profile (3) and circumferential sections (17) of the recess (7) of the second hollow profile (5).

9. The method according to claim 8, **characterized in that**
the pressure device (13) presses two further contact portions (11) of the first hollow profile (3), each of said contact portions being formed on a further surface (9) of the first hollow profile (3), against circumferential sections (17) of the recess (7) of the second hollow profile (5), in order to generate two further zero-gaps (15) between contact portions (11) of the first hollow profile (3) and circumferential sections (17) of the recess (7) of the second hollow profile (5).

10. The method according to claim 9, **characterized in that**
the two further contact portions (11) are formed on opposing surfaces (9) of the first hollow profile (3).

11. The method according to one of the preceding claims, **characterized in that**
a laser welding process is performed in step f).

12. The method according to one of the preceding claims, **characterized in that**
the hollow profiles (3, 5) are pre-fabricated in a IHU-(internal high pressure forming), roller-, or rolling process.

13. The method according to claim 12, **characterized in that**
hollow profiles (3, 5) are pre-fabricated with a rectangular cross section.

14. A pressure device (13) for performing the method according to one of claims 1 to 13, comprising a housing (25) supported on a force-controlled robot arm (25), wherein a spread wedge (27) and at least two pressing jaws (29) are disposed slidably in the housing in a force-controlled manner by means of a pneumatically driven displacement device, wherein the spread wedge (27) comprises side surfaces (31), each interacting with a pressing jaw (29) such that a movement of the spread wedge (27) along a pressing direction (33) causes a movement of the pressing jaws (29), at which movement the pressing jaws (29) move apart from each other, and wherein a retracting device (35) allocated to the pressing jaws (29), which retracting device is provided with elongated, positively engaging protrusions (47) and recesses (49) at the spread wedge (27) and the pressing jaws (29), causes a coupled movement of the spread wedge (27) and the pressing jaws (29) at a movement of the spread wedge (27) along a disengaging direction, at which movement the pressing jaws (29) move towards each other.

15. The pressure device according to claim 14, **characterized in that** the pressing direction (33) is opposed to the disengaging direction (37), in particular, **in that** the pressing direction (33) is directed out of the housing (25) and the disengaging direction (37) is directed into the housing.

16. The pressure device according to claim 14 or 15, **characterized in that** the side surfaces (31) of the spread wedge (27) for interacting with the pressing jaws (29) are formed by side surfaces of a truncated pyramid (41).

17. The pressure device according to claim 16, **characterized in that** the truncated pyramid (41) has a square base (43).

18. The pressure device according to claim 17, **characterized in that** the pressure device comprises two pressing jaws (29), each interacting with a side surface of the truncated pyramid (41).

19. The pressure device according to claim 17, **characterized in that** the pressure device comprises four pressing jaws (29), each interacting with a side surface of the truncated pyramid (41).

20. The pressure device according to claim 16, **characterized in that** the truncated pyramid (41) has a triangular, pentagonal, hexagonal or polygonal regular base (43).

21. The pressure device according to one of claims 14 to 20, **characterized in that** the retracting device (35) comprises at least one recuperating spring (45) that moves the pressing jaws (29) towards each other when the spread wedge (27) is moved along the disengaging direction (37).

22. The pressure device according to one of claims 14 to 21, **characterized in that** the spread wedge (27) and/or the pressing jaws (29) are slidably disposed in the housing (25) by means of sliding bearing (51).

## Revendications

1. Procédé de fabrication d'un joint soudé entre deux profilés creux (3, 5) enfichés l'un dans l'autre, comprenant les étapes consistant à :
a) préparer un premier profilé creux (3) et un second profilé creux (5),
b) enficher le premier profilé creux (3) dans un évidement (7) du second profilé creux (5), lequel premier profilé creux (3) présente des surfaces opposées (9), qui comprennent respectivement une zone de contact (11), qui sert au raccordement avec des sections périphériques (17) de l'évidement (7) du second profilé creux (5),
c) aménager un dispositif de compression (13) maintenu sur un bras de robot à servocommande entre les zones de contact opposées (11), lequel dispositif de compression présente au moins deux mors (29), un dispositif de déplacement entraîné par voie pneumatique, une cale d'expansion et un boîtier (25),
d) activer le dispositif de compression (13) et l'écartement des au moins deux mors (29) contre les zones de contact (11) au moyen du dispositif de déplacement entraîné par voie pneumatique en retirant la cale d'expansion (27) du boîtier (25) pour écarter les zones de contact opposées (11) l'une de l'autre, dans le but de générer au moins par sections un interstice nul (15) entre les zones de contact (11) du premier profilé creux (3) et les sections périphériques (17) de l'évidement (7) du second profilé creux (5),
e) arrêter le dispositif de compression (13) lorsqu'une force de retrait de la cale d'expansion (27) du boîtier (25) dépasse une valeur prédéterminée,
f) exécuter une opération de soudage ou de brasage le long de l'interstice nul (15) pour raccorder le premier profilé creux (3) au second profilé creux (5), et
g) désactiver le dispositif de compression et le déplacement en arrière de la cale d'expansion (27), lequel déplacement de la cale d'expansion (27) via des saillies (47) et des évidements (49) allongés, s'engageant l'une dans l'autre par adaptation de forme, sur la cale d'expansion (27) et les mors (29) est couplé à un déplacement en arrière des mors (29) l'un vers l'autre.

2. Procédé selon la revendication 1, comprenant en outre, après l'étape a), une fixation du second profilé creux (5) dans un poste d'assemblage (19).

3. Procédé selon la revendication 1 ou 2, comprenant en outre, après l'étape b), une fixation du premier profilé creux (3) dans le poste d'assemblage (19).

4. Procédé selon les revendications 2 et 3, **caractérisé en ce que** les profilés creux (3, 5) sont fixés perpendiculairement l'un à l'autre dans le poste d'assemblage (19).

5. Procédé selon l'une quelconque des revendications précédentes, comprenant en outre, après l'étape c), une fixation du dispositif de compression (13) dans le poste d'assemblage (19).

6. Procédé selon l'une quelconque des revendications précédentes, **caractérisé en ce que** le dispositif de compression (13) est activé en appuyant sur un bouton.

7. Procédé selon l'une quelconque des revendications précédentes, **caractérisé en ce que** l'interstice nul (15) est généré au moins le long des 2/3 d'une longueur de la zone de contact (11), perpendiculairement à une direction de compression (21) du dispositif de compression (13).

8. Procédé selon l'une quelconque des revendications précédentes, **caractérisé en ce que** le dispositif de compression (13) presse au moins une autre zone de contact (11) d'une autre surface (9) du premier profilé creux (3) sur le second profilé creux (5) pour générer un autre interstice nul (15) entre les zones de contact (11) du premier profilé creux (3) et les sections périphériques (17) de l'évidement (7) du second profilé creux (5).

9. Procédé selon la revendication 8, **caractérisé en ce que** le dispositif de compression (13) presse deux autres zones de contact (11) du premier profilé creux (3), dont chacune est formée sur une autre surface (9) du premier profilé creux (3), sur des sections périphériques (17) de l'évidement (7) du second profilé creux (5) pour générer deux autres interstices nuls (15) entre les zones de contact (11) du premier profilé creux (3) et les sections périphériques (17) de l'évidement (7) du second profilé creux (5).

10. Procédé selon la revendication 9, **caractérisé en ce que** les deux autres zones de contact (11) sont formées sur des surfaces opposées (9) du premier profilé creux (3).

11. Procédé selon l'une quelconque des revendications précédentes, **caractérisé en ce que** l'on réalise, à l'étape f), un procédé de soudure par laser.

12. Procédé selon l'une quelconque des revendications précédentes, **caractérisé en ce que** les profilés creux (3, 5) sont préalablement fabriqués par un procédé IHU, à rouleaux ou à cylindres.

13. Procédé selon la revendication 12, **caractérisé en ce que** les profilés creux (3, 5) sont préfabriqués avec une section transversale rectangulaire.

14. Dispositif de compression (13) pour réaliser le procédé selon l'une quelconque des revendications 1 à 13, comprenant un boîtier (25) maintenu sur un bras de robot à servocommande, dans lequel on aménage de manière déplaçable dans le boîtier (25) une cale d'expansion (27) et au moins deux mors (29) commandés par servocommande au moyen d'un dispositif de déplacement entraîné par voie pneumatique, la cale d'expansion (27) comprend des surfaces latérales (31), qui coopèrent respectivement avec un mors (29) de sorte qu'un déplacement de la cale d'expansion (27) le long d'une direction de pressage (33) provoque un déplacement des mors (29), par lequel les mors (29) s'éloignent l'un de l'autre, et un dispositif de rappel (35) affecté aux mors (29) avec des saillies (47) et des évidements (49) allongés s'engageant l'un dans l'autre par adaptation de forme, provoque sur la cale d'expansion (27) et les mors (29), lors d'un déplacement de la cale d'expansion (27) le long d'une direction de dégagement (37), un déplacement couplé de la cale d'expansion (27) et des mors (29), avec lequel les mors (29) se déplacent l'un vers l'autre.

15. Dispositif de compression selon la revendication 14, **caractérisé en ce que** la direction de pressage (33) s'étend à l'opposé de la direction de dégagement (37), en particulier la direction de pressage (33) s'oriente en dehors du boîtier (25) et la direction de dégagement (37) s'oriente vers l'intérieur du boîtier.

16. Dispositif de compression selon la revendication 14 ou 15, **caractérisé en ce que** les surfaces latérales (31) de la cale d'expansion (27) sont formées pour coopérer avec les mors (29) par le biais de surfaces latérales d'un tronc de pyramide (41).

17. Dispositif de compression selon la revendication 16, **caractérisé en ce que** le tronc de pyramide (41) présente une surface de base carrée (43).

18. Dispositif de compression selon la revendication 17, **caractérisé en ce que** celui-ci présente deux mors (29), qui coopèrent respectivement avec une surface latérale du tronc de pyramide (41).

19. Dispositif de compression selon la revendication 17, **caractérisé en ce que** celui-ci présente quatre mors (29), qui coopèrent respectivement avec une surface latérale du tronc de pyramide (41).

20. Dispositif de compression selon la revendication 16, **caractérisé en ce que** le tronc de pyramide (41) présente une surface de base régulière (43) de type triangulaire, pentagonale, hexagonale ou polygonale.

21. Dispositif de compression selon l'une quelconque des revendications 14 à 20, **caractérisé en ce que** le dispositif de rappel (35) comprend au moins un ressort de rappel (45), qui déplace les mors (29) l'un vers l'autre, lorsque la cale d'expansion (27) est déplacée le long de la direction de dégagement (37).

22. Dispositif de compression selon l'une quelconque des revendications 14 à 21, **caractérisé en ce que** l'on aménage la cale d'expansion (27) et/ou les mors (29) dans le boîtier (25) de manière à pouvoir se déplacer au moyen de paliers lisses (51).
